# EUROPEAN PATENT APPLICATION

(11) **EP 4 635 833 A1**
(43) Date of publication of application: **22.10.2025**
(21) Application number: 25171365.7
(22) Date of filing: 17.04.2025
(51) Int. Cl.: B62H 3/02

(54) **FOLDABLE BICYCLE PARKING DEVICE**

(30) Priority: 19.04.2024 NL 2037504
(71) Applicant: Kooymans Beheer BV, 4285 BE Woudrichem (NL)
(72) Inventor: KOOIJMANS, Antonius Gerardus Petrus Johannes, 4285 BE Woudrichem (NL)
(74) Representative: Verhees, Godefridus Josephus Maria

(57) **Abstract**

A bicycle parking device 1 has a base 3 and a bicycle rack 5 that comprises two legs 7 that are each hingedly connected to the base 3 with a first end, which bicycle rack 5 is movable between a storage position in which the bicycle rack 5 is rotated on or in the base 3 and a working position in which the bicycle rack is present at an angle to the base 3. The base 3 and at least one of the legs 7 are provided with a cam 13 and a cam follower element 15 cooperating with the cam 13, whereby during the pivoting of the bicycle rack 5 the cam 13 and the cam follower element 15 move over each other, wherein in the working position the bicycle rack 5 is blocked against rotation because the cam follower element 15 is present in a recess 17 present in the cam 13, wherein the cam 13 and the cam follower element 15 are secured against rotation relative to each other.

## Description

### Technical field of the invention

The invention relates to a bicycle parking device comprising:
- a base, and
- a bicycle rack comprising two legs, each of which is connected to the base by a first end in a pivotable manner about a horizontal pivot axis and the legs are connected to each other by a second end, which bicycle rack is movable between a storage position in which the bicycle rack is rotated on or in the base and an operating position in which the bicycle rack is present at an angle to the base,
- a cam and a cam follower element cooperating with the cam, one of which is arranged on the base and the other is arranged on one of the legs,
- wherein the cam and the cam follower element are configured in such a way that during the pivoting of the bicycle rack the cam and the cam follower element move over each other, and
- wherein in the operating position rotation of the bicycle rack is limited because the cam follower element is locked in a recess present in the cam.

### Background of the invention

A bicycle parking device according to the preamble of claim 1 is known from US9610993B1. In the storage position, the bicycle rack is in a horizontal position, blocked in the base and in the working position, the bicycle rack is in an upright position whereby a limited rotation from the vertical position is possible. In both the blocked horizontal position and in the limited rotational vertical position, the blocking or the limited rotation is the result of a pin present on the bicycle rack that is locked in a recess present in the cam, which recesses are connected to each other by a narrow slot. The pin is slidably present on a thin axle that can be moved through the narrow slot. By sliding the pin over the axle in such a way that it comes out of the recess, the bicycle rack can be moved between the storage position and the working position.

### Summary of the invention

An object of the invention is to provide a bicycle parking device in which the bicycle rack can be moved more easily between the storage position and the working position. To this end, the bicycle parking device according to the invention is characterized in that the base on either side of the bicycle rack is provided with vertical slots or the legs of the bicycle rack near the lower ends are provided with slots that extend vertically in the working position, through which slots parts of the pivot axis protrude, whereby these parts of the pivot axis and the slots are slidable relative to each other, so that in the working position of the bicycle rack the cam follower element is locked in the recess and the parts of the pivot axis are locked in the slots, so that the bicycle rack cannot be rotated about the pivot axis. This construction allows the bicycle rack to be moved vertically in the working position and, when the bicycle rack is rotated from the storage position to the working position, the cam follower element automatically falls into the recess due to gravity, so that no additional actions are required to lock the bicycle rack in the working position.

So the bicycle rack can be moved vertically relative to the base. In order to get from the working position to the storage position, the bicycle rack must first be lifted slightly so that it can be rotated to the horizontal storage position. From this storage position, the bicycle rack can be rotated to the working position, whereby the cam follower element moves over the cam and thereby lifts the bicycle rack until the cam follower element comes above the recess and the bicycle rack drops down.

If the slots are present in the base, the parts of the pivot axis are located at the top of these vertical slots when the cam follower element is moved over the cam and, in the vertical position of the bicycle rack, they drop to a position at the bottom of these vertical slots. If the slots are present in the legs of the bicycle rack, the parts of the pivot axis are located at the bottom of these slots when the cam follower element is moved over the cam and, in the vertical position of the bicycle rack when the bicycle rack is fallen down, the parts of the pivot axis are located at the top of the slots.

The bicycle rack only needs to be rotated from the storage position to the working position and as a result of gravity the bicycle rack comes into the working position where it is blocked against rotation. Rotating the bicycle rack can be achieved, for example, by rotating the bicycle parking device around an edge to slightly beyond the vertical position so that the bicycle rack rotates out of or from the base to the working position as a result of gravity.

Preferably each leg is provided with a cam follower element and the base on either side of the bicycle rack is provided with a cam that is attached to the base.

The cam is preferably formed by a plate that is attached to the base and the cam follower element is preferably formed by a round pin that is attached to the leg of the bicycle rack.

An embodiment of the bicycle parking device according to the invention is characterised in that the recess in the cam is formed by a vertical further slot in which the cam follower element can be locked in the working position of the bicycle rack.

The bicycle parking device preferably also has a connecting element via which the two legs are connected to each other with the second ends.

A further embodiment of the bicycle parking device according to the invention is characterized in that the bicycle parking device further comprises at least one further bicycle rack that is also provided with two legs that are hingedly connected to the base with one end, whereby the free ends of the bicycle rack taper and are present in the storage position between the ends of the legs of the further bicycle rack that are hingedly connected to the base. As a result, the length of the bicycle parking device is smaller than the sum of the heights of the bicycle racks and space is saved that is favorable for transporting the bicycle parking devices.

Yet another embodiment of the bicycle parking device according to the invention is characterised in that the cams protrude from the base with a part of the top and are provided with a recess on the underside in which the part of the cam protruding above the base fits closely, so that when bicycle parking devices are stacked on top of each other, they are secured against shifting in the horizontal direction.

### Brief description of the drawings

The invention will be explained in more detail below using an exemplary embodiment of the bicycle parking device according to the invention shown in the drawings. Here:
Figure 1 shows an embodiment of the bicycle parking device according to the invention with the bicycle racks in working position;
Figure 2 shows the bicycle parking device shown in figure 1 with the bicycle racks in storage position;
Figure 3 shows the bicycle parking device with the bicycle racks in working position and an intermediate position during turning;
Figure 4 shows a detail of the bicycle parking device at the pivot axis, with the bicycle rack shown in various positions during rotation;
Figure 5 shows two bicycle parking devices coupled to each other;
Figure 6 shows a detail of the coupling means for coupling bicycle parking devices to each other;
Figure 7 shows a number of bicycle parking devices stacked on top of each other with the bicycle racks in storage position; and
Figure 8 shows a detail of two bicycle parking devices stacked on top of each other.

### Detailed description of the drawings

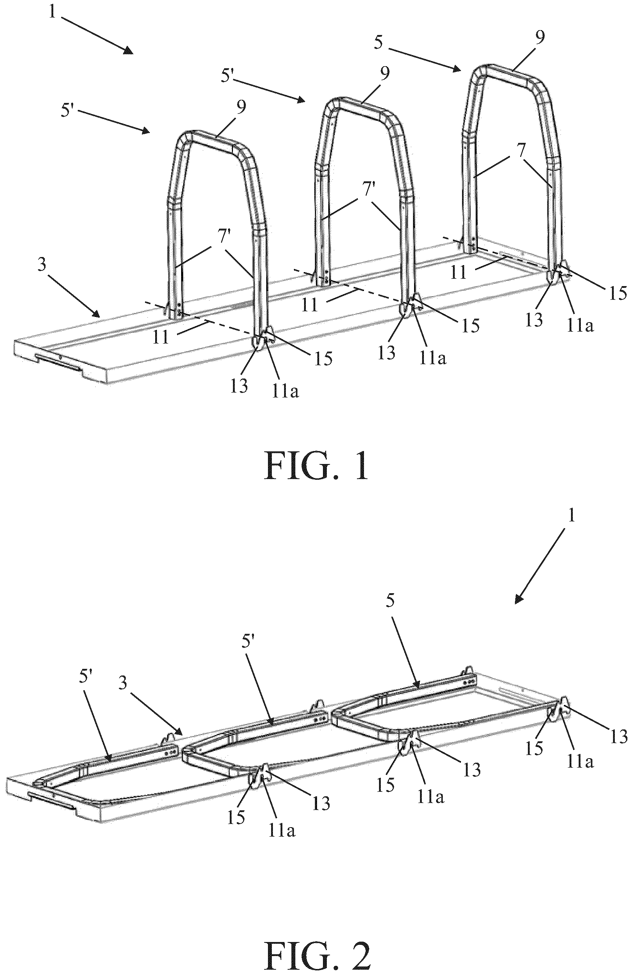

Figures 1 and 2 show an embodiment of the bicycle parking device 1 according to the invention with the bicycle racks 5 and 5' in working position and storage position respectively. The bicycle parking device 1 has a base 3 and three bicycle racks 5 and 5', each having two legs 7 and 7' and a connecting element 9 that connects the two legs 7 at the upper ends (in the case of upright bicycle racks). Each leg 7, 7' is connected to the base 3 at the lower end in a pivotable manner about a horizontal pivot axis 11. The bicycle racks 5 are movable between a storage position in which the bicycle rack 5 is rotated on or in the base 3, see figure 2, and a working position in which the bicycle rack 5 is present at right angles to the base 3, see figure 1. The base 3 is provided with cams 13 that are formed by profiled plates. The legs 7 and 7' are provided with cam follower elements 15 that cooperate with the cams and are formed by pins.

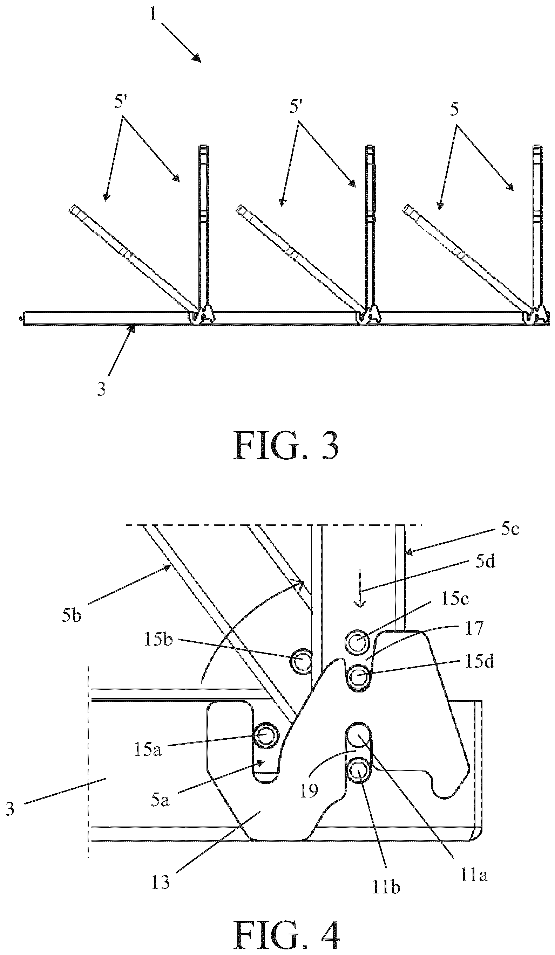

During the pivoting of the bicycle rack 5 from the storage position to the working position, the cam follower element 15 slides over the cam 13, whereby the bicycle rack 5 is lifted, see figure 3 in which the bicycle parking device 1 with the bicycle racks 5 and 5' are shown in the working position and in an intermediate position during the pivoting. In the working position, the bicycle rack 5 is blocked against rotation by the cam follower element 15 being present in a recess 17 present in the cam 13 (see figure 4), whereby the cam 13 and the cam follower element 15 are secured against rotation relative to each other.

The free ends of the bicycle racks 5 and 5' taper, so that in the storage position the free ends are present between the ends of the legs 7' of the further bicycle racks 5' that are hinged to the base 3.

Figure 4 shows a detail of the bicycle parking device at the pivot axis, with the bicycle rack shown in various positions during rotation. The position of the bicycle rack in the storage position is indicated by 5a, with the position of the cam follower element in this position indicated by 15a. The intermediate position 15b of the bicycle rack shown in figure 3 is indicated by 5b, with the position of the cam follower element indicated by 15b. The position of the bicycle rack in the vertical position is indicated by 5c, with the cam follower element in the position indicated by 15c. The position of the bicycle rack in the working position is indicated by arrow 5d to indicate that the bicycle rack has lowered in this position into the locked position. The position of the cam follower element in this position is indicated by 15d.

In the working position, the part of the pivot axis attached to the leg is in the position indicated by 11b and in the other positions, the part of the pivot axis is in the position indicated by 11a in a slot 19 in the bottom of the cam 13. In the working position of the bicycle rack, the cam follower element is in a recess 17 in the top of the cam 13.

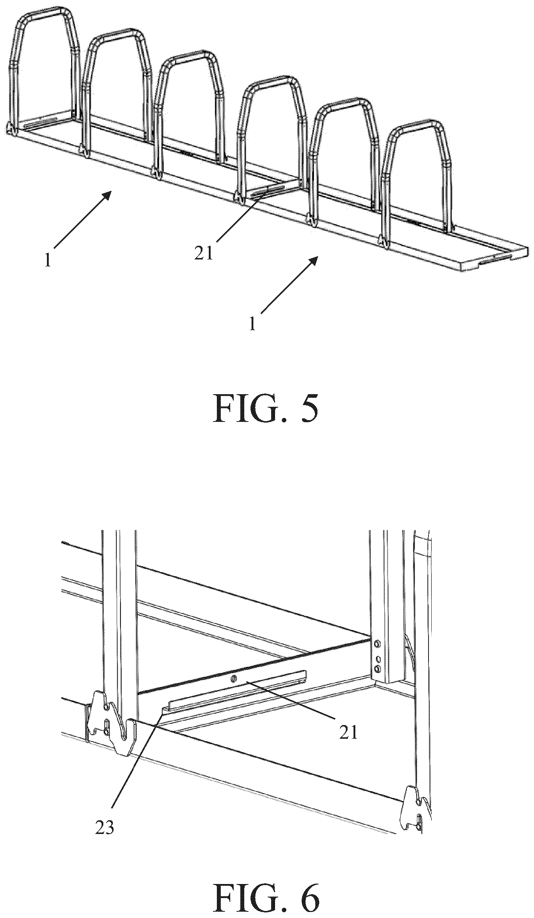

Figure 5 shows two bicycle parking devices 1 coupled to each other. Figure 6 shows a detail of the coupling means for coupling bicycle parking devices to each other. The base of the bicycle parking devices 1 is provided with a hook 21 at one end and at the other end the base is provided with a slot 23 into which the hook 21 can be hooked.

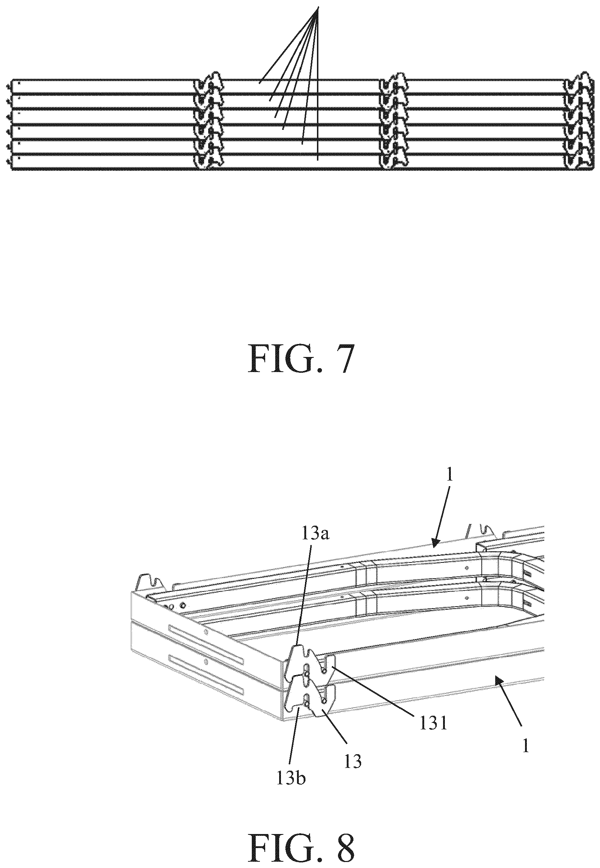

Figure 7 shows a number of stacked bicycle parking devices 1 with the bicycle racks in storage position. Figure 8 shows a detail of two stacked bicycle parking devices 1. The cams 13 protrude with a part 13a from the top from the base 3 and are provided on the underside with a recess 13b in which the part 13a of the cam 13 protruding above the base 3 fits closely, so that stacked bicycle parking devices are secured against shifting in the horizontal direction.

Although the invention has been explained above with reference to the drawings, it should be noted that the invention is by no means limited to the embodiments shown in the drawings. The invention also extends to all embodiments deviating from the embodiments shown in the drawings within the framework defined by the claims.

## Claims

1. Bicycle parking device (1) comprising:
- a base (3), and
- a bicycle rack (5) comprising two legs (7) each of which is connected to the base (3) by a first end in a way that it can be hinged about a horizontal pivot axis (11) and the legs (7) are connected to each other by a second end, which bicycle rack (5) is movable between a storage position in which the bicycle rack (5) is rotated on or in the base (3) and an operating position in which the bicycle rack (5) is present at an angle to the base (3),
- a cam (13) and a cam follower element (15) cooperating with the cam (13), one of which is mounted on the base (3) and the other on one of the legs (7),
- wherein the cam (13) and the cam follower element (15) are configured such that during the pivoting of the bicycle rack (5), the cam (13) and the cam follower element (15) move over each other, and
- wherein in the working position rotation of the bicycle stand (5) is limited by the cam follower element (15) being locked in a recess (17) present in the cam (13),
**characterized in that** the base (3) on both sides of the bicycle stand (5) is provided with vertical slots (19) or the legs of the bicycle stand (5) are provided near the lower ends with slots which in the working position extend in a vertical direction, through which slots (19) parts of the pivot axis (11) project, whereby these parts of the pivot axis (11) and the slots (19) are slidable relative to each other, so that in the working position of the bicycle stand (5) the cam follower element (15) is locked in the recess (17) and the parts of the pivot axis (11) are locked in the slots (19) so that the bicycle rack (5) cannot be rotated about the hinge axis (11).

2. Bicycle parking device according to claim 1, **characterized in that** each leg (7) is provided with a cam follower element (15) and the base on either side of the bicycle rack is provided with a cam (13) that is attached to the base (3).

3. Bicycle parking device according to claim 1 or 2, **characterized in that** the cam (13) is formed by a plate that is attached to the base (3).

4. Bicycle parking device according to claim 1, 2 or 3, **characterized in that** the recess (17) in the cam (13) is formed by a vertical further slot in which the cam follower element can be locked in the working position of the bicycle rack (5).

5. Bicycle parking device according to one of the preceding claims, **characterized in that** the cam follower element (15) is formed by a round pin that is attached to the leg (7) of the bicycle rack (5).

6. Bicycle parking device according to one of the preceding claims, **characterized in that** the bicycle parking device further comprises a connecting element (9) via which the two legs (7) are connected to each other with the second ends.

7. Bicycle parking device according to one of the preceding claims, **characterized in that** the bicycle parking device further comprises at least one further bicycle rack (5') that is also provided with two legs (7') that are hingedly connected to the base (3) with one end, whereby the free end of the bicycle rack (5) taper and in the storage position are between the ends of the legs (7') of the further bicycle rack (5') that are hinged to the base (3).

8. Bicycle parking device according to one of the preceding claims, **characterised in that** the cams (13) protrude from the base (3) with a part (13a) of the top and are provided with a recess (13b) on the underside in which the part (13a) of the cam (13) protruding above the base (3) fits closely, so that when bicycle parking devices are stacked on top of each other, they are secured against shifting in the horizontal direction.
